# EUROPÄISCHE PATENTSCHRIFT

(11) **EP 0 500 982 B1**
(45) Veröffentlichungstag und Bekanntmachung des Hinweises auf die Patenterteilung: **21.09.1994**
(21) Anmeldenummer: 91102898.3
(22) Anmeldetag: 28.02.1991
(51) Int. Cl.: G01N 3/30, F15B 13/02

(54) **Prüfeinrichtung zum mechanischen Belasten eines Prüfkörpers**
Test device for applying mechanical loading to a specimen
Dispositif d'essai pour soumettre un échantillon à charges mécaniques

(43) Veröffentlichungstag der Anmeldung: 02.09.1992
(73) Patentinhaber: CARL SCHENCK AG, D-64273 Darmstadt (DE)
(72) Erfinder: Beran, Josef, W-6101 Rossdorf (DE)
(74) Vertreter: Brandt, Ernst-Ulrich, Dipl.-Phys., Dipl.-Ing.

(56) Entgegenhaltungen:
- EP-A- 0 225 397
- EP-A- 0 326 070
- DE-C- 741 556
- SOVIET INVENTIONS ILLUSTRATED Week 8401, 15. Februar 1984 Derwent Publications Ltd., London, GB; AN 84-005166/01 & SU-A-1 002 895 (DVOEGLAZOV G A) 7. März 1983

## Beschreibung

### Prüfeinrichtung zum mechanischen Belasten eines Prüfkörpers

Die Erfindung betrifft eine Prüfeinrichtung zum mechanischen Belasten eines Prüfkörpers nach dem Oberbegriff des Anspruches 1.

Solche Einrichtungen werden zur Durchführung von Schnellzerreißversuchen oder Durchstoßversuchen benutzt. Bei hydraulischen Schnellzerreißmaschinen werden die Prüfkörper üblicherweise mit einer Prüfenergie beaufschlagt, die in sehr kurzer Zeit aufgebracht wird. Nach Durchlaufen eines Vorlaufweges wird bei den Schnellzerreißmaschinen der Prüfkörper mit dem Antriebszylinder gekoppelt und eine Belastungskraft auf den Prüfkörper übertragen, wobei während der Belastungsphase der Antriebszylinder in Abhängigkeit von der Zerreißgeschwindigkeitsänderung aktiv, auf den Prüfkörper einwirkt (EP-A2-0 326 070). Mit den bekannten Prüfmaschinen ist es daher nicht möglich, den Prüfling mit einer vor dem Versuch definierbaren Energie zu belasten. Zur Durchführung von Versuchen, bei welchen der Prüfkörper mit einer bestimmten Energie belastet wird sind Pendelschlagwerke und Fallhämmer bekannt, deren kinetische Energie sich aus der entsprechenden Masse und der Fallhöhe bestimmt. Während sich die Belastungsenergie durch entsprechende Auswahl der fallenden Masse nahezu unbegrenzt variieren läßt, sind bei der maximal realisierbaren Belastungsgeschwindigkeit deutliche Grenzen gesetzt. So wäre beispielsweise bei einer Belastungsgeschwindigkeit von 20 Meter pro Sekunde eine Fallhöhe von 20 Metern erforderlich.

Ein weiterer Nachteil des Standes der Technik liegt darin, daß Versuche, bei welchen der Prüfkörper zunächst mit einer bestimmten Energie belastet werden und anschließend einem Zerreißtest unterzogen werden soll, einen Prüfmaschinenwechsel erfordern.

Aus der EP-A1-0 225 397 ist eine Prüfeinrichtung zur Erzeugung von stoßartigen Belastungen an einem Prüfling bekannt. Bei dieser Prüfeinrichtung wird der Prüfling nach einer vorgebbaren Funktion mit einer hydraulischen Belastungseinrichtung mit Belastungszylinder beschleunigt und anschließend verzögert. Zur Steuerung der Druckmittelzufuhr zum Belastungszylinder ist ein Servoventil vorgesehen, welches so geschaltet werden kann, daß die beiden Zylinderkammern des Belastungszylinders miteinander in Verbindung stehen.

Der Erfindung liegt daher die Aufgabe zugrunde, eine Prüfeinrichtung zu schaffen, die es ermöglicht, den Prüfkörper durch Einleiten einer vor dem Versuch bestimmbaren Prüfenergie zu beanspruchen. Dabei soll auch eine sehr hohe Belastungsgeschwindigkeit realisierbar sein.

Diese Aufgabe wird bei einer gattungsgemäßen Prüfeinrichtung durch die kennzeichnenden Merkmale des Anspruches 1 gelöst. Durch das Kurzschließen der beiden Arbeitskammern wird die unterstützende Wirkung des Arbeitszylinders in der aktiven Phase ausgeschaltet.

Um sowohl für die Zug- als auch für die Druckrichtung Versuche durchführen zu können, ohne daß größere Umbauten an der Prüfmaschine erforderlich sind, ist bei einer Ausführungsform der Erfindung vorgesehen, daß der Steueranschluß in etwa mittig zwischen den beiden Stirnseiten des Arbeitszylinders angeordnet ist. Bei einer Ausführungsform der Erfindung, welche sich durch einen besonders kompakten und einfachen Aufbau auszeichnet, ist vorgesehen, daß die zweite Ventileinrichtung als 3/3-Wegeventil ausgeführt ist, an welchem neben dem Steueranschluß zwei Verbindungsleitungen angeschlossen sind, die jeweils im Bereich einer stirnseitigen Begrenzung des Antriebszylinders in die zugeordneten Arbeitskammern münden. Die Anzahl von Druckmittelleitungen läßt sich reduzieren, wenn die Verbindungsleitungen identisch mit den Verbindungen der Arbeitskammern mit der ersten Ventileinrichtung sind. Für Schnellzerreißversuche in nur einer bestimmten Richtung genügt ein 2/2-Wegeventil.

Die Prüfenergie bzw. die Zerreißgeschwindigkeit läßt sich besonders genau einstellen, wenn die erste Ventileinrichtung ein Servoventil oder Proportionalventil ist. Bei einer Ausführungsform, die einen besonders einfachen Aufbau der Druckmittelsteuerung aufweist, ist vorgesehen, daß der Antriebszylinder als Gleichlaufzylinder ausgeführt ist.

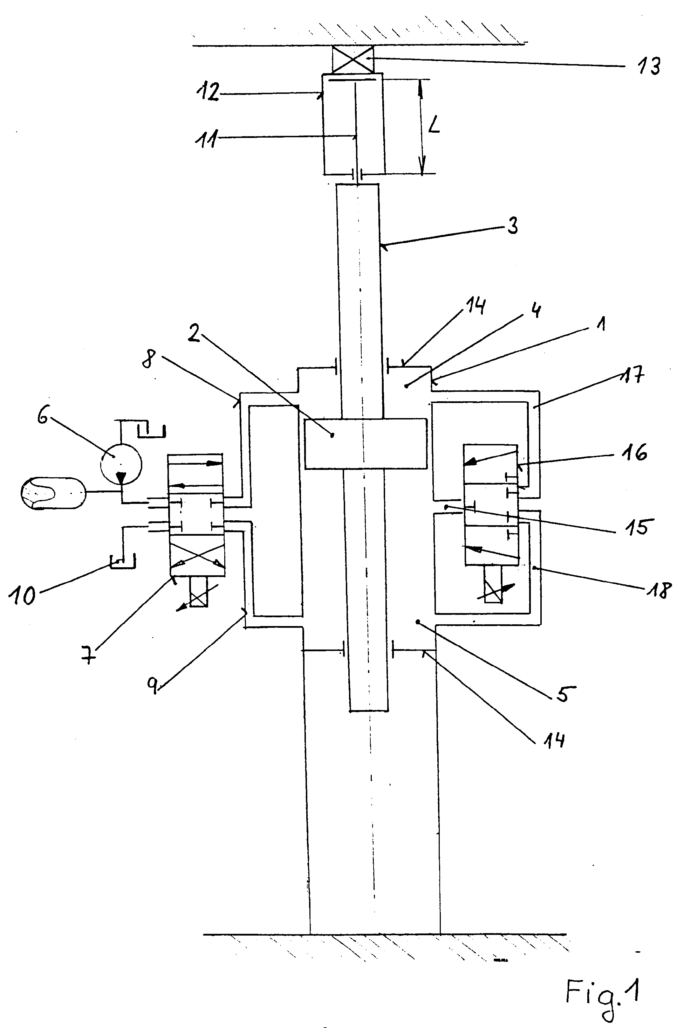

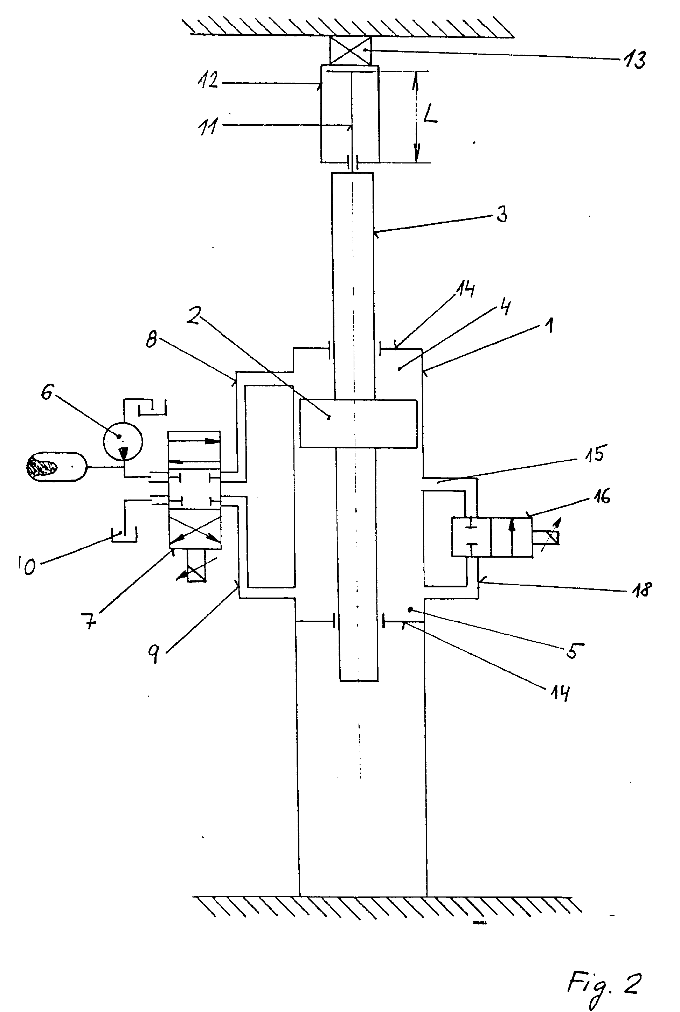

Weitere vorteilhafte Merkmale so wie die Funktion der Erfindung ergeben sich aus der nachstehenden Beschreibung anhand der Zeichnung. Hierzu zeigen die Figuren 1 und 2 in schematischer Darstellung jeweils eine Ausführungsform der Erfindung.

Die Prüfeinrichtung gemäß Fig. 1 weist einen hydraulisch betriebenen Antriebszylinder 1 auf, in dem ein Kolben 2, der den Antriebszylinder 1 in zwei Arbeitskammern 4, 5 unterteilt, geführt ist, dessen zugeordnete Kolbenstange aus dem Antriebszylinder 1 herausgeführt sind. Als Druckmittelquelle dient eine Pumpe 6 und ein Speicher, der in Abhängigkeit von der Stellung der ersten Ventileinrichtung 7 über die Verbindung 8 mit der ersten Arbeitskammer 4 oder über die Verbindung 9 mit der zweiten Arbeitskammer 5 verbunden werden kann. In den genannten Schaltstellungen ist dann die Verbindung 9 bzw. die Verbindung 8 über die Ventilsteuerkanten als Rücklaufleitung mit dem Behälter 10 verbunden. Die erste Ventileinrichtung 7 ist als elektromagnetisch gesteuertes 4/3- Wege-Proportionalventil ausgeführt, welches in seiner stromlosen Mittellage geschlossen ist.

Das aus der ersten Arbeitskammer 4 herausgeführte Ende der Kolbenstange 3 ist mit einer Mitnehmereinrichtung 11 versehen, welche um den Vorlaufweg L verschiebbar in der Vorlaufeinrichtung 12 gelagert ist. Der Prüfkörper 13 ist mit einer Einspannvorrichtung (nicht näher dargestellt), mit der Vorlaufvorrichtung 12 von der einen Seite und mit einem Belastungsrahmen von der anderen Seite, verbunden.

Mittig zwischen den beiden Stirnseiten 14 ist der Mantel des Antriebszylinders 1 mit einem Steueranschluß 15 versehen, der mit der zweiten Ventileinrichtung 16 verbunden ist. Die zweite Ventileinrichtung 16 ist als stromlos geschlossenes 3/3- Wegeventil ausgeführt, welches in seinen beiden anderen Schaltstellungen den Steueranschluß 15 alternativ mit der Verbindungsleitung 17 oder der Verbindungsleitung 18 verbindet, wobei die Verbindungsleitung 17 an die erste Arbeitskammer 4 und die Verbindungsleitung 18 an die zweite Arbeitskammer 5 angeschlossen ist. Die Anschlüsse der beiden Verbindungsleitungen 17, 18 an die Arbeitskammern sind wie auch die entsprechenden Anschlüsse der Verbindungen 8 und 9 nahe der zugeordneten Stirnwände 14 vorgesehen.

Bei einer (nicht dargestellten) Variante ist vorgesehen, daß die Verbindungsleitung 17 in die Verbindung 8 und die Verbindungsleitung 18 in die Verbindung 9 mündet. Diese Ausführungsform zeichnet sich durch besondere Kompaktheit und niedrigen Fertigungsaufwand aus.

In Abhängigkeit von der Schaltstellung der ersten Ventileinrichtung kann der Prüfkörper 13 sowohl Druck- als auch Zugbeanspruchungen ausgesetzt werden. Da die erste Ventileinrichtung als Proportionalventil ausgeführt ist, kann die Kolbengeschwindigkeit durch entsprechendes Einstellen der Strömungsquerschnitte in der Verbindung zwischen der Druckmittelquelle und der entsprechenden Arbeitskammer variiert werden.

Bei geschlossener zweiter Ventileinrichtung 16 lassen sich Hochgeschwindigkeitsbeslastungsprüfungen wie Schnellzerreiß-oder Durchstoßversuche in ansich bekannter Weise durchführen. Während bei den letzt genannten Versuchen der hydraulische Druck während der gesamten Versuchszeit den Kolben 2 beaufschlagt, soll bei einer Prüfkörperbelastung durch eine definierte Energie die Antriebseinheit nicht aktiv auf den Prüfkörper einwirken. Hierzu sieht die Erfindung vor, die beiden Arbeitskammern kurz bevor die Anlaufstrecke zurückgelegt ist kurzzuschließen.

Die in Fig. 1 dargestellte Position des Kolbens 2 entspricht der Ausgangslage für einen Versuch, bei welchem der Prüfkörper 13 in der aktiven Phase einer Zugbelastung unterworfen werden soll. Soll der Prüfkörper 13 nun mit einer vorbestimmten Energie belastet werden, so wird vor Versuchsstart die zweite Ventileinrichtung 16 so geschaltet, daß der Steueranschluß 15 an die Verbindungsleitung 18 angeschlossen ist. Die erste Ventileinrichtung 7 wird so angesteuert, daß der Strömungsquerschnitt zwischen der Druckmittelquelle und der ersten Arbeitskammer 4 einen der gewünschten Kolbengeschwindigkeit entsprechenden Wert beträgt. Noch bevor der Kolben 2 den Vorlaufweg L zurückgelegt hat überfährt er die Steuerkante im Antriebszylinder, welche durch den Steueranschluß 15 gebildet ist. Von diesem Zeitpunkt an ist die bis dahin druckbeaufschlagte Arbeitskammer 4 mit der an den Behälter 10 angeschlossenen zweiten Arbeitskammer 5 verbunden, wodurch ein Druckausgleich zwischen den beiden Arbeitskammern 4, 5 stattfindet, sodaß der hydraulische Druck keinen Einfluß mehr auf die Bewegung des Kolbens 2 hat. Bedingt durch die Drosselwirkung der Steuerkanten des Proportionalventils 16 stellt sich in beiden Arbeitskammern 4, 5 ein Druck ein, der etwa dem halben Wert des Speisedrucks entspricht. Für Belastungen in Druckrichtung gelten sinngemäß die gleichen Schritte.

Dadurch, daß die zweite Ventileinrichtung 16 bereits vor dem Versuchsstart geschaltet wird, sind sehr hohe Belastungsgeschwindigkeiten möglich. Eine Versuchsdurchführung mittels Kurzschließen der beiden Arbeitskammern durch Schalten eines Ventiles während eines Hubes würde an den realisierbaren Schaltgeschwindigkeiten von Hydroventilen scheitern. Bei ausgeführten Prüfmaschinen dieser Art werden beispielsweise 90 000 Liter Hydrauliköl pro Minute durchgesetzt, sodaß bei einer Belastungsgeschwindigkeit von 20 Meter pro Sekunde eine utopische Ventilschaltzeit von einer Millisekunde nötig wäre.

Fig. 2 zeigt eine gegenüber der gerade beschriebenen Prüfmaschine vereinfachte Ausführungsform der Erfindung, mit welcher Schnellzerreiß- bzw. Durchstoßversuche sowohl in Druck - als auch in Zugrichtung durchgeführt werden können, wobei jedoch Versuche, bei denen der Prüfkörper mit einer bestimmten Energie belastet werden soll nur in Zugrichtung möglich sind. Für einander entsprechende Teile werden die gleichen Bezugszeichen wie in Fig. 1 gewählt. Die Funktion sowie der prinzipielle Aufbau entspricht der Ausführungsform gemäß Fig. 1. Der Unterschied gegenüber dieser Ausführungsform liegt darin, daß der Steueranschluß 15 an ein 2/2-Wegeventil 16 angeschlossen ist, über welches er mit der Verbindungsleitung 18 verbindbar ist. Wie auch bei der Ausführungsform gemäß Fig. 1 ist die Verbindungsleitung 18 in der Nähe der Stirnseite 14 der vom Prüfkörper 13 abgewandt liegenden Arbeitskammer 5 vorgesehen.

## Patentansprüche

1. Prüfeinrichtung zum mechanischen Belasten eines Prüfkörpers (13) mit einem durch ein Druckmittel betätigbaren und an den Prüfkörper (13) koppelbaren Antriebszylinder (1), der durch einen Kolben (2) in zwei Arbeitskammern (4, 5) unterteilt ist, und der mittels einer ersten Ventileinrichtung (7) mit einer Druckmittelquelle (6) verbindbar ist, wobei vor der Koppelung des Antriebszylinders (1) mit dem Prüfkörper (13) ein Vorlaufweg des Antriebszylinders (1) vorgesehen ist, dadurch gekennzeichnet, daß der Antriebszylinder (1) im Bereich der Kolbenlauffläche einen Steueranschluß (15) aufweist, der durch eine zweite Ventileinrichtung (16) mit mindestens einer im Bereich einer stirnseitigen Begrenzung (14) des Antriebszylinders (1) mündenden Verbindungsleitung (17, 18) verbindbar ist, durch die die beiden Arbeitskammern (4, 5) kurz bevor der Vorlaufweg beendet ist durch den Steueranschluß (15), die zweite Ventilanordnung (16) und die Verbindungsleitung (17, 18) verbindbar sind.

2. Prüfeinrichtung nach Anspruch 1, dadurch gekennzeichnet, daß der Steueranschluß (15) in etwa mittig zwischen den beiden Stirnseiten (14) des Antriebszylinders angeordnet ist.

3. Prüfeinrichtung nach einem der vorhergehenden Ansprüche, dadurch gekennzeichnet, daß die zweite Ventileinrichtung (16) als 3/3- Wegeventil ausgeführt ist, an welchem neben dem Steueranschluß (15) zwei Verbindungsleitungen (17, 18) angeschlossen sind, die jeweils im Bereich einer stirnseitigen Begrenzung in den Antriebszylinder (1, 2) münden.

4. Prüfeinrichtung nach einem der vorhergehenden Ansprüche, dadurch gekennzeichnet, daß die Verbindungsleitungen (17, 18) identisch sind mit den Verbindungen (8, 9) der Arbeitskammern (4, 5) mit der ersten Ventileinrichtung (7).

5. Prüfeinrichtung nach einem der vorhergehenden Ansprüche, dadurch gekennzeichnet, daß die erste Ventileinrichtung (7) ein Proportionalventil, ein Servoventil oder ein ähnlich funktionierendes Steuerventil ist.

6. Prüfeinrichtung nach einem der vorhergehenden Ansprüche, dadurch gekennzeichnet, daß der Antriebszylinder (1, 2) als Gleichlaufzylinder ausgebildet ist.

## Claims

1. Test device for mechanically loading a test sample (13) with a drive cylinder (1) which is operable by a pressure medium and may be coupled to the test sample (13), said drive cylinder being subdivided by a piston (2) into two working chambers (4, 5) and being connectable with the aid of a first valve device (7) to a pressure medium source (6), an approach displacement of the drive cylinder (1) being provided prior to coupling of the drive cylinder (1) to the test sample (13), characterized in that the drive cylinder (1) in the region of the piston contact face has a control connection (15), which may be connected by a second valve device (16) to at least one connection line (17, 18), which opens in the region of an end delimitation (14) of the drive cylinder (1) and by means of which the two working chambers (4, 5), shortly before completion of the approach displacement, may be connected by the control connection (15), the second valve arrangement (16) and the connection line (17, 18).

2. Test device according to claim 1, characterized in that the control connection (15) is disposed approximately centrally between the two end faces (14) of the drive cylinder.

3. Test device according to one of the preceding claims, characterized in that the second valve device (16) takes the form of a 3/3-way valve, connected to which besides the control connection (15) are two connection lines (17, 18) which each open into the drive cylinder (1 2) in the region of an end delimitation.

4. Test device according to one of the preceding claims, characterized in that the connection lines (17, 18) are identical with the connections (8, 9) of the working chambers (4, 5) to the first valve device (7).

5. Test device according to one of the preceding claims, characterized in that the first valve device (7) is a proportional valve, a servo valve or a similarly operating control valve.

6. Test device according to one of the preceding claims, characterized in that the drive cylinder (1, 2) takes the form of a synchronizing cylinder.

## Revendications

1. Dispositif d'essai pour soumettre un échantillon (13) à des charges mécaniques, comprenant un vérin d'entraînement (1) qui peut être actionné par un agent de pression et être accouplé à l'échantillon (13) et qui est subdivisé par un piston (2) en deux chambres de travail (4, 5), et qui peut être relié à une source d'agent de pression (6) au moyen d'un premier dispositif distributeur (7), une course préalable du vérin d'entraînement (1) étant prévue avant l'accouplement du vérin d'entraînement (1) avec l'échantillon (13), caractérisé en ce que le vérin d'entraînement (1) comprend dans la région de la surface de déplacement du piston un raccord de commande (15) qui peut être relié par l'intermédiaire d'un second dispositif distributeur (16) avec au moins une conduite de liaison (17, 18) débouchant dans la région d'une paroi limite (14) des côtés frontaux du vérin d'entraînement (1), conduite par laquelle les deux chambres de travail (4, 5) peuvent être reliées peu avant que la course préalable soit terminée par le raccord de commande (15), le second agencement distributeur (16) et la conduite de liaison (17, 18).

2. Dispositif d'essai selon la revendication 1, caractérisé en ce que le raccord de commande (15) est disposé sensiblement à mi-chemin entre les deux côtés frontaux (14) du vérin d'entraînement.

3. Dispositif d'essai selon l'une quelconque des revendications précédentes, caractérisé en ce que le second dispositif distributeur (16) est constitué sous forme d'un distributeur à 3/3 voies auquel sont raccordées, en dehors du raccord de commande (15), deux conduites de liaison (17, 18) qui débouchent respectivement dans la zone d'une paroi limite située sur les côtés frontaux dans le vérin d'entraînement (1, 2).

4. Dispositif d'essai selon l'une quelconque des revendications précédentes, caractérisé en ce que les conduites de liaison (17, 18) sont identiques aux liaisons (8, 9) avec les chambres de travail (4, 5) du premier dispositif distributeur.

5. Dispositif d'essai selon l'une quelconque des revendications précédentes, caractérisé en ce que le premier dispositif distributeur (7) est une soupape proportionnelle, une servo-soupape ou une soupape de commande fonctionnant de façon analogue.

6. Dispositif d'essai selon l'une quelconque des revendications précédentes, caractérisé en ce que le vérin d'entraînement (1, 2) est constitué sous forme d'un vérin de synchronisation.
